# EUROPEAN PATENT SPECIFICATION

(11) **EP 1 466 466 B1**
(45) Date of publication and mention of the grant of the patent: **02.11.2006**
(21) Application number: 02786265.5
(22) Date of filing: 20.12.2002
(51) Int. Cl.: H04M 3/42

(54) **A SYSTEM AND A METHOD FOR CONNECTING TELEPHONE CALLS DIRECTLY ON THE BASIS OF A TEXT QUERY**
SYSTEM UND VERFAHREN ZUM DIREKTEN VERBINDEN VON FERNSPRECHVERBINDUNGEN AUF DER BASIS EINER TEXTANFRAGE
SYSTEME ET PROCEDE D'ETABLISSEMENT DIRECT DE COMMUNICATIONS SUR LA BASE DE DEMANDES TEXTUELLES

(30) Priority: 21.12.2001 NO 20016359
(43) Date of publication of application: 13.10.2004
(73) Proprietor: Scandinavian Mobile Technology AS, 0511 Oslo (NO)
(72) Inventor: HAUGLUM, Per, Lasse, N-1344 Haslum (NO)
(74) Representative: Haley, Stephen
(86) International application number: PCT/NO2002/000495
(87) International publication number: WO 2003/056796

(56) References cited:
- EP-A2- 0 952 723
- EP-A2- 1 195 975
- WO-A1-02/05533
- WO-A2-02/078304
- FR-A1- 2 812 155

## Description

The present invention relates to a method for connecting telephone calls in digital telephone systems, in particular in mobile telephone systems.

It is a fact that remembering telephone numbers is more difficult than remembering symbolic names. Therefore, in the general prior art, local catalogues stored in mobile telephones, provide the option of attaching freely selected names to certain telephone numbers. This option assists a user who wishes to call a limited number of subscribers without always having to remember their numbers, but who instead uses their corresponding names. The alternative is a time-consuming search in a printed telephone directory, or the use of an information service against a charge.

Recently, telephone operators have introduced an information service that is able to deliver a subscriber telephone number in response to a query call stating a subscriber name, using a Short Message Service (SMS). There are some drawbacks to this information service solution. Many people have the same or similar names, and many alternative telephone numbers may appear in a small telephone display, making it difficult to decide correctly. Also, spelling first, middle and last names correctly may be difficult. It should also be noted that this is a service that provides telephone numbers for the user, not a service that ends up in a call connection.

Some other solutions have been proposed in the patent literature:

EP 0952723 A discloses a directory information system with call completion capability. The user of VOIP terminal sends a text query to a server. The text query contains information like name, city, address; As result to the query the server sends back a list of telephone numbers JP 2082854 discloses a method of dialling text on a telephone where the telephone itself converts that text to a telephone number. In other words, the user telephone is a special telephone that must be pre-programmed with names/text and corresponding telephone numbers. The telephone sends normal telephone numbers, so the system outside the telephone is a quite ordinary system.

From JP 5041739 a solution is known in which the user first establishes a connection to a certain operator centre (by using an ordinary telephone in an ordinary manner), and then the user utters, by voice, a telephone number that he wishes as the destination number. The operator centre is special in that it has a voice recognition function and is able to fetch the destination number from a table with matching "sounds" and telephone numbers.

US patent application no. 09/813,845, publication no. US 2002/0136390-A1 (published after the priority date of the present invention) describes a solution in which a connection can be established between two (or several) subscribers, where the calling party must state, in a text message that is sent to a predetermined address, some analyzable information according to pre-defined rules, and where the calling party is a "valid" or registered customer. In other words, the calling party first registers with the operator, and a set of rules or specific commands are defined, so that for example a message "c1" shall mean "establish a connection between my mobile phone and my home telephone".

WO 02/05533-A1 (published after the priority date of the present invention) discloses a method for creating a call connection between a mobile subscriber and a second telephone subscription in response to a request from the mobile subscriber. An SMS service is used for the request. An operator centre in the mobile operator network contains a database that is consulted on the basis of e.g. a name stated in the request, and this database, that is preferably a general telephone directory, provides a telephone number. Then, a telephone call is made to the requesting mobile subscriber, the requesting subscriber answers, and the destination subscriber telephone is called thereafter. Once this call has been answered, the equipment of the mobile operator links the call connections so as to form a call connection between the two parties.

The method of WO 02/05533-A1 is related in some ways to the present invention. But the known method suffers from some drawbacks, of which the most important one is the ambiguity problem. There is no statement in WO 02/05533-A1 regarding what to do when a request results in several destination numbers. And with a general, very large telephone directory as the database, the result will, more often than not, be several numbers as the result of a request based for instance on a name.

Further, WO 02/05533-A1 relies solely on a mobile operator centre in a certain mobile network, while it would be preferable to realize such a system with an independent service provider with a standardized interface. In other words, only the subscribers of the special mobile operator, registered by that operator and enabled to use certain message codes and commands through their special subscription, can use this service, not anybody with another subscription.

Thus, there remains a need for a service that is open to everyone with a general digital telephone subscription, and that is able to establish call connection directly between such a general subscriber (user, calling party) and a select customer (called party) without any ambiguity problem.

The present invention aims to fulfil this need, and does so by providing a method such as defined precisely in the appended claim 1, and a digital telephone system such as defined precisely in the appended claim 14. In another aspect, the invention appears through a call request signal such as defined precisely in the appended claim 23. Favourable and preferred embodiments of the invention appear from the attached dependent claims.

In contrast to the closest prior art, the present invention consequently deals with a system and a method in which anybody can act as a calling party, but in which method every called party is a customer registered in the database of a special telephone service provider. The service provider establishes such a database for containing customer profiles with special telephone domain names that form a basis for a text message from a general user, and this database guarantees a hit, if the user is able to write such a domain name correctly. The prior art systems and methods act oppositely, namely by allowing registered customers (calling parties) to use predefined commands in their own networks, and cannot guarantee hits in a very large, general database, or they rely on specific connection pairs obtainable by means of codes pre-defined by the user (calling party) and stored with his special service provider.

In some embodiments of the present invention, before connecting the call, and in accordance with information stored in the operator centre database, a text message, or a voice call, may be returned first to the calling party, presenting choices on behalf of the called party. It should be noted that this represents no ambiguity, but an option that may increase the value of the service.

In the following, the present invention shall be illuminated in closer detail by discussing embodiments thereof, and it will be referred to the drawings, of which
Fig. 1 shows a flow chart explaining general steps and optional steps of the method of the present invention, and
Fig. 2 shows a system diagram that outlines several important elements in the system of the invention.

While underlining that the present invention relates to a general digital telephone system with the ability to transmit text messages, the invention will be described in the following with a GSM mobile telephone system as an example.

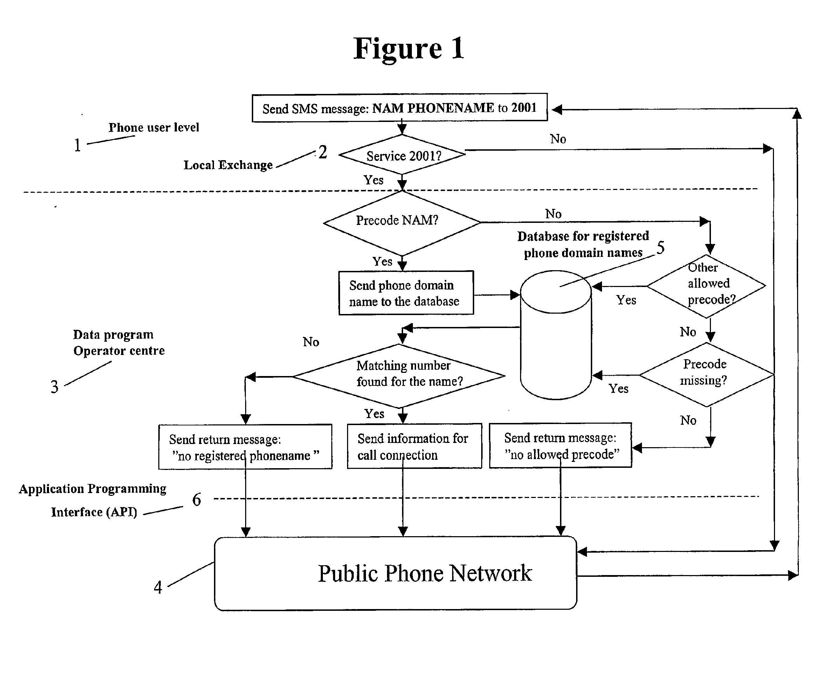

With reference to Fig. 1, a telephone service provider/operator establishes a special database 5 in an operator centre 3. This operator centre 3 is identified in the network by a special operator centre code (2001). The database 5 is a database containing customer profiles for customers who acquire such profile space in the database by special agreement with, and payment to, the operator/service provider.

The customers may be private persons, firms or institutions, but it is a main idea that a customer wishes to receive approaches from the public. Therefore, firms and institutions offering various services to the public, are logically the prime customer candidates.

One example is a taxi company. By establishing a customer profile in the database, with a telephone domain name as simple as "TAXI", the taxi company enables a public user 1 to send a very simple SMS message, namely "TAXI" to the address "2001 ". When the database of the operator centre "2001" is searched for "TAXI", the taxi company, or rather its telephone number is found, and while a connection to the user (calling party) 1 is opened, a call is initiated to the taxi company and the two connections are linked, so that the user reaches the taxi company directly, simply by sending the "TAXI" text message.

Often an operator centre 3 may offer other services than the service presented here, for instance entertainment of some kind. Then, pre-codes are preferably used to distinguish the services. In the taxi example, a message format might then be "NAM TAXI", i.e. with a pre-code NAM to specify the desired "name-based" service. However, if the operator centre offers solely the service of the present invention, or gives priority to this service, no pre-code is needed for a call setup.

The connection to the customer (taxi company) is established through other operator networks 4 in a normal manner. The initiating text message from the user's mobile telephone is routed via at least one local exchange 2, usually through several exchanges, to reach the special operator centre 3. The operator centre 3 is not necessarily in a mobile network.

Thus, customers (parties to be called) will be able to choose their own unique symbolic names, to be attached to their telephone numbers in their profiles in a database in an operator centre. Direct connection of a call from a public user (calling party) will then be enabled by means of an optional pre-code, a telephone domain name and an operator centre code (example: send "NAM MUTSIBUSHU" to "2001 ", and a direct call is set up to the firm MUTSIBUSHU). This is achieved by a telephone service provider who establishes a text message service pointing to the data system and programs of a certain operator centre 3. By searching in the operator centre database, the unique telephone number is found in a table by means of the system programs.

With further reference to Fig. 1, when a mobile SMS message is sent by a user 1, a local exchange 2 interprets the SMS code and forwards the message to the special operator centre 3 if 2001 is the address of that operator centre. The program in the operator centre 3 checks whether a pre-code NAM has been dialled, and if so, forwards a call with the telephone domain name to the database 5. The result is checked by the program, which on return of a telephone number sends a request for connection of a call to a telephone exchange 4 in a public phone network. If the database search does not lead to any return of information, an error message "no registered phone name" is sent in return to the calling party (user) 1.

If no pre-code has been entered by the user 1, the request with the telephone domain name is nevertheless forwarded to the database 5, using tests shown in fig. 1 to the right of database 5. Only if there is a pre-code that is not recognized by this operator centre ("2001 "), a return message to the user 1 will state "no allowed precode".

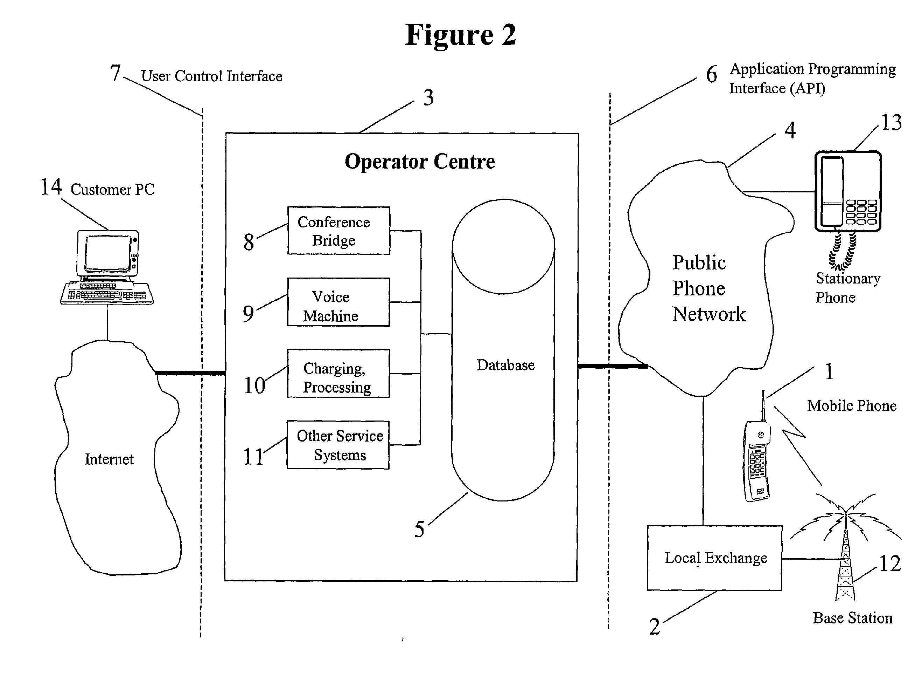

Fig. 2 shows compulsory and optional elements in the system of the present invention. At the heart of the system is an operator centre 3 with the special database 5 containing customer/domain name profiles. The operator centre 3 may include a conference bridge 8 for connecting conference calls, and a voice machine 9 for return voice messages to a user. A box 10 symbolizes functions for charging and data processing, and another box 11 represents optional services offered by this operator centre 3, i.e. other services than the connecting service of the present invention.

The operator centre 3 is connected to a public telephone network 4 via an Application Programming Interface 6. The user 1 is represented in fig. 2 by a mobile phone, connectable to a local exchange 2 via a base station 12. (Other network units in the mobile network have been left out for simplicity.) The mobile network, represented by the local exchange 2, is connected to the public telephone network 4.

A stationary telephone 13 represents mainly a destination subscriber, but may also represent a user, i.e. a calling party, if the telephone apparatus 13 and the public phone network 4 is a digital network with the capability of transmitting text messages.

The option of a direct connection to the Internet from the operator centre 3 via a User Control Interface 7, is indicated to the left in the drawing. Hence, a customer may register in the operator centre 3 from his own computer 14, or he may, e.g. using passwords, send commands to alter profile parameters in his own customer profile, as needed.

The customer profiles may contain a lot more information than only a telephone number paired with the domain name. One firm having many local branch offices in various geographical locations, may enter several telephone numbers in its customer profile, together with an instruction to create a match between the user's 1 location and the nearest branch office location. Hence, when sending the request message "NAM MUTSIBUSHU", the call will be connected directly to the nearest MUTSIBUSHU office.

This can be achieved by sending location data for the user's mobile phone, which data are normally inaccessible in the lower levels of the communication protocol, from the user as part of the information on the application level. With this method it also becomes possible to introduce numerous other alternative services, like return messages to the calling party.

The system of the invention also opens for other possible solutions. One example is that several public service providers within one common service field may pay the database centre operator for the right to be entered as choices within one special customer profile with one special, corresponding domain name. For instance, competing taxi firms in a major city, like "OsloTaxi", "Norgestaxi", "Taxi 2" might do so. Then, when a user sends a text message "NAM TAXI" to 2001, the common customer profile may present a choice which is returned to the user, either as a voice message or as a text message, for instance "Select 1 for OsloTaxi, select 2 for Norgestaxi etc." The user then simply presses the number key of his choice, and the operator centre immediately establishes the desired connection.

Another possibility, related to the case problem a user may experience when he is in a city in which he does not know the local taxi company's telephone number, is a general instruction in the taxi firm database profile, to compare the user's position (as explained above) to the position of any local taxi firm, thereby to provide a connection directly to the nearest local taxi firm central, on the basis of the user's actual location. This means that the user can enter "NAM TAXI" without any modification even when he is in another city, and his "home" taxi firm, or rather the special taxi firm or taxi central holding the important domain name "TAXI", will provide a connection to any local taxi central, in any city.

Thus, in the present invention, the user (calling party) will always get, as a result, a direct call connection, or one defined action in return from the system before finishing by making the direct call connection. The problem of getting the right corresponding destination telephone number is solved within the operator's customer system. In the prior art, there will always be a problem to get a reliable result from searching a database when a variety of different input types, formats and pre-codes is accepted. In the present invention there is exact definition of message content and form for retrieval of a destination subscription.

A data handling program in the operator centre includes detailed handling procedures for several different services and actions, depending on the optional pre-code, the telephone domain name, the corresponding profile and a decision database which is an integrated part of the system.

With regard to international calls, the solution of the present invention is to use a telephone domain name and dot plus top domain (for instance a country code). Thus, the format of the telephone domain name, full length version, is "DOMAINNAME.TOPDOMAIN", where TOPDOMAIN will be a national code used in domain names for the Internet, or other top domains like "com", "org" etc. Examples: "MUTSIBUSHU.COM", "MUTSIBUSHU.DE". Missing dot and TOPDOMAIN indicate by default a domestic call, if not otherwise defined in the database or customer profile.

Depending on the pre-code, additional value added services are offered in the system of the present invention. When options are presented and a voice or text message call is made back to the user 1, pre-defined options will be given for servicing that special telephone domain name:
- Confirmed destination subscriber identity with name and address. A cancellation of the call can thus be made before connection takes place.
- If a company with more than one office location is called, various optional connections can be selected by pressing phone keys according to given information.
- When data for position/location of the caller are added, the optional connections can be limited to the most likely targets.
- If keywords like "TAXI" are used, it is possible to choose between different local companies (also based on caller location).
- If a destination subscriber line is occupied, a voice may offer connection setup when the destination subscriber line becomes free ("just dial one").

Further, in the database there can be included a number of options that will
- connect to different numbers dependent of time of day, week or year,
- give different automatic reply messages depending on time (as above),
- receive voice messages,
- connect conference calls according to definition associated with only one telephone domain name.

All customer profile options can be set up or altered under common security precautions using identifiers and passwords. It will be possible to use SMS messages with a pre-code for customer control of the domain names, to
- register new names,
- ask who is the owner,
- alter any profile parameter,
- deleting own domain names.

Further, an option will be to contact the operator centre 3 via the Internet and a User Control Interface 7, see fig. 2.

As a default setting, if no pre-code is given in an incoming SMS message, a call will be set up to the owner of the domain name included in the SMS message.

The operator centre 3 may of course be an integrated part of one or more operators' network, interconnected with other exchanges and service switches with e.g. Signalling System No. 7, as in the closest prior art system. However, this puts several restrictions on the operation of the service, since such signalling systems are designed for operation within one network or for interconnection between networks. A better solution is the one in the present invention, where an API (Application Programming Interface) is used, this API being offered by a mobile network operator to an independent provider of the "operator centre". An example of such an API is found in the specifications from the Parlay Group, as given at www.parlay.org. Using an API is very much different from using a network signalling system, since the API takes care of all security issues and charging information. API's like Parlay have been developed just to maintain security when "others" gain access to the signalling system of a network.

Regarding charging procedures, there are many ways of arranging this. One possibility is that the destination subscriber (customer) pays the complete cost (except for the standard SMS charge), i.e. "free toll calls" (green numbers) for the users. Another possibility is that the caller (user) pays for the call by a fixed overcharge SMS, however with a limited connection time. Further, it is possible to pay by means of an "electronic wallet for micro payments".

It is possible also to establish conference calls by means of the system of the present invention. Telephone domain names for conference calls may be similar to the "normal" telephone domain names, but there will be a difference in profile definition, where at least two subscriber numbers will be stored. The system program will connect all the stored destination numbers to the user/caller in a conference call (if the destination subscribers answer). The subscribers in such a profile need not be "customers" with the operator centre.

Another manner of connecting a conference call is that the user sends an extra text message while he is busy in a first connection already established through the operator centre 3. The new text message, with another telephone domain name, will result in a new call from the operator centre to another destination, and finally the new connection is linked into the existing connection.

The code 2001 has, so far, been used as an example of a four-digit code representing the special operator centre 3. Among many such codes that are used by different telephone service providers, it will of course be favourable if a code is chosen or allocated, that is easy to remember, like 2468 or 5555. Another easily found code is a code generated by a four-letter word like NAME or similar. In a standard mobile phone keyboard, pressing the keys N-A-M-E will give a number code 6263. Therefore, 6263 may be a favourable operator centre code.

In the discussions above, various examples of phone domain names similar to domain names for Internet, with or without national Internet domain suffix (like .no for Norway), email address or Internet address (URL) have been given. It should be noted that in principle, a telephone domain name could be any unique identifier found on products, like a part number or registration number, or any unique number like the number part of an EAN code (bar code), a car registration number etc.

The purpose of registering such phone domain names could for example be to provide, for a consumer, easy access to product information like price, warranty, recommended use, an offer to buy etc. Such information could be given automatically by a voice machine, by direct connection to a service call centre or simply a call connection to the owner of the product.

## Claims

1. A method for connecting telephone calls in digital telephone systems, in which method a user (1) sends, using a text-based message service, information to an operator centre (3), on the basis of which information a destination telephone number is found in a database (5) in said operator centre (3), and a call is connected between the user (1) and a desired destination,
**characterized by**
- establishing in said operator centre database (5) a customer profile base for customers having acquired from the operator a right to respective telephone domain names PHONENAME, said customer profile base containing at least one destination telephone number for every telephone domain name, and
- the users (1) sending said information in the form of a message consisting of at least a telephone domain name PHONENAME and an operator centre code 2001, so that said message is routed via at least one local exchange (2) to the operator centre (3) due to said operator centre code 2001, and in the operator centre said database (5) is searched for a desired domain name and at least a corresponding destination telephone number, a destination thereafter being called from the operator centre by means of said destination telephone number, while another call is routed to the user (1), and the connection is established directly.

2. The method of claim 1,
**characterized in that** said operator centre (3) is connected to a network by means of an Application Programming Interface (6), using a standardized set of commands to establish connections between the user (1) and the destination in any sequence defined by service logics or control actions.

3. The method of claim 2,
**characterized in that** said operator centre (3) further operates to provide voice or messaging prompts as defined by said service logics or control actions.

4. The method of claim 2,
**characterized in that** said operator centre (3) further operates to collect and forward, as needed, charging information to billing centres.

5. The method of claim 1,
**characterized in that** said operator centre (3) collects data regarding a user's (1) location from said local exchange (2), and from these data the operator centre (3) orders connection of the call to a nearest local telephone among telephones having destination telephone numbers in a customer profile identified by a telephone domain name stated in the message from the user (1).

6. The method of claim 1,
**characterized in that** the operator centre (3) collects data regarding a user's (1) location from the local exchange (2), and in accordance with a pre-programmed decision algorithm said operator centre (3) returns to the user (1) a message with at least two alternative choices regarding destination connection.

7. The method of claim 6,
**characterized in that** the message with choices is a text message.

8. The method of claim 6,
**characterized in that** the message with choices is a voice message stating the called telephone domain name PHONENAME and dialling choices for alternative call destinations.

9. The method of claim 1,
**characterized in that** the message from the user (1) contains a pre-code NAM for the purpose of distinguishing this message from messages to the same operator centre (3) regarding other services offered by that operator centre.

10. The method of claim 1,
**characterized in that** when a certain customer profile contains a conference call instruction linked to a certain telephone domain name PHONENAME the operator centre (3) automatically connects a conference call between the user (1) and at least two other subscriptions who may not be customers.

11. The method of claim 1,
**characterized in that** when a first call connection has been established by the operator centre (3) between a user (1) and a first domain name destination, the user (1) sends another text message containing another telephone domain name to invoke another destination telephone number from the database (5), and when this new destination call has been connected from the operator centre (3), the first call connection and the new call connection are linked to form a conference call.

12. The method of claim 1,
**characterized in that** a customer profile base in the operator centre database (5) is provided with variable parameters like location and time, so that a corresponding destination may vary with respect to such parameters.

13. The method of claim 1,
**characterized in that** an operator centre code 2001 is selected for mnemonic or easy-dialling purposes, like 6263 for NAME in a standard telephone keyboard.

14. A digital telephone system for connecting calls, including user (1) telephones having an option for using a text-based message service, local exchanges (2) and an operator centre (3) having a database (5),
**characterized in that**
- said database (5) includes a customer profile base for customers having acquired from the operator the right to respective telephone domain names PHONENAME,
- said customer profile base contains at least one destination telephone number for every domain name,
- said operator centre (3) also includes
- means (10) for fetching from said database (5) a destination telephone number that corresponds to a telephone domain name PHONENAME included in said message, and
- means (10) for calling the destination telephone number and the user number, and for connecting the user (1) directly to a corresponding destination.

15. The system of claim 14,
**characterized in that** said operator centre (3) is connected to a network by means of an Application Programming Interface (6), using a standardized set of commands to establish connections between the user (1) and the destination in any sequence defined by service logics or control actions.

16. The system of claim 15,
**characterized in that** said operator centre (3) further comprises means (9) to provide voice or messaging prompts as defined by said service logics or control actions.

17. The system of claim 15,
**characterized in that** said operator centre (3) further comprises means (10) to collect and forward, as needed, charging information to billing centres.

18. The system of claim 14,
**characterized in that** said operator centre (3) comprises means (10) for collecting data regarding a user's (1) location from said local exchange (2), and from these data to order connection of the call to a nearest local telephone among telephones having destination telephone numbers in a customer profile identified by a telephone domain name stated in the message from the user (1).

19. The system of claim 14,
**characterized in that** the operator centre (3) comprises means (10) for collecting data regarding a user's (1) location from the local exchange (2), and means for returning, in accordance with a pre-programmed decision algorithm, to the user (1) a message with at least two alternative choices regarding destination connection.

20. The system of claim 19,
**characterized in that** said means for returning a message is a voice machine (9).

21. The system of claim 14,
**characterized in that** the operator centre (3) contains a conference bridge (8) for connecting conference calls between the user (1) and at least two other subscriptions that are not necessarily customers of the operator centre (3).

22. The system of claim 14,
**characterized in that** a customer profile base in the operator centre database (5) is provided with variable parameters like location and time.

23. A call request signal for use when connecting exchanges (2) and operator centres (3) for direct connection of calls in digital telephone systems,
**characterized in that** the signal is a signal for a text-based message service, and comprises at least
- a telephone domain name PHONENAME, and
- an operator centre code 2001.

24. The signal of claim 23,
**characterized in that** it comprises also a pre-code NAM to indicate a specific service offered by an operator centre (3).

25. The signal of claim 23,
**characterized in that** the telephone domain name contains also an Internet top domain indication.

## Patentansprüche

1. Verfahren zum Verbinden von Telefonanrufen in digitalen Telefonsystemen, bei welchem ein Benutzer (1) Information unter Verwendung eines textbasierten Nachrichtenservices an eine Betreiberzentrale (3) schickt, auf der Grundlage derer eine Zieltelefonnummer in einer Datenbank (5) in der Betreiberzentrale (3) gefunden wird, und ein Anruf zwischen dem Benutzer (1) und einem gewünschten Ziel verbunden wird,
**dadurch gekennzeichnet, dass**
- in der Betreiberzentrale-Datenbank (5) eine Kundenprofildatenbank für Kunden eingerichtet wird, die vom Betreiber ein Recht auf entsprechende Telefondomainnamen PHONENAME erlangt haben, wobei die Kundenprofildatenbank wenigstens eine Zieltelefonnummer für jeden Telefondomainnamen enthält, und
- die Kunden (1) die Information in der Form einer Nachricht senden, die wenigstens einen Telefondomainnamen PHONENAME und einen Betreiberzentrale-Code 2001 umfasst, so dass die Nachricht über wenigstens eine lokale Vermittlungsstelle (2) aufgrund des Betreiberzentrale-Codes 2001 an die Betreiberzentrale (3) weitergeleitet wird, und in der Betreiberzentrale die Datenbank (5) nach einem gewünschten Domainnamen und wenigstens einer dazugehörigen Zieltelefonnummer durchsucht wird, wobei danach mittels der Zieltelefonnummer ein Ziel von der Betreiberzentrale aus angerufen wird, während ein anderer Anruf an den Benutzer (1) weitergeleitet wird, und die Verbindung direkt aufgebaut wird.

2. Verfahren gemäß Anspruch 1,
**dadurch gekennzeichnet, dass** die Betreiberzentrale (3) mittels einer Schnittstelle zur Anwendungsprogrammierung (6) mit dem Netzwerk unter Verwendung eines standardisierten Satzes an Befehlen verbunden wird, um Verbindungen zwischen dem Benutzer (1) und dem Ziel in einer beliebigen durch Servicelogik oder Steueraktionen definierten Abfolge aufzubauen.

3. Verfahren gemäß Anspruch 2,
**dadurch gekennzeichnet, dass** die Betreiberzentrale (3) ferner betreibt, Sprach- oder Nachrichteneingabeaufforderungen bereitzustellen, wie sie durch die Servicelogik oder Steueraktionen definiert werden.

4. Verfahren gemäß Anspruch 2,
**dadurch gekennzeichnet, dass** die Betreiberzentrale (3) ferner betreibt, Abrechungsinformation zu sammeln und nach Bedarf an Gebührenerfassungszentralen weiterzuschicken.

5. Verfahren gemäß Anspruch 1,
**dadurch gekennzeichnet, dass** die Betreiberzentrale (3) Daten bezüglich eines Ortes eines Benutzers (1) aus der lokalen Vermittlungsstelle (2) sammelt, und aus diesen Daten die Betreiberzentrale (3) eine Verbindung des Anrufs zu einem nächstliegenden lokalen Telefon unter Telefonen anweist, die Zieltelefonnummern in einem Kundenprofil haben, das durch einen in der Nachricht vom Benutzer (1) angegebenen Telefondomainnamen identifiziert wird.

6. Verfahren gemäß Anspruch 1,
**dadurch gekennzeichnet, dass** die Betreiberzentrale (3) Daten bezüglich eines Ortes eines Benutzers (1) aus der lokalen Vermittlungsstelle (2) sammelt, und die Betreiberzentrale (3) gemäß einem vorprogrammierten Entscheidungsalgorithmus an den Benutzer (1) eine Nachricht mit wenigstens zwei alternativen Wahlmöglichkeiten bezüglich der Zielverbindung zurückgibt.

7. Verfahren gemäß Anspruch 6,**dadurch gekennzeichnet, dass** die Nachricht mit Wahlmöglichkeiten eine Textnachricht ist.

8. Verfahren gemäß Anspruch 6,
**dadurch gekennzeichnet, dass** die Nachricht mit Wahlmöglichkeiten eine Sprachnachricht ist, die den angerufenen Telefondomainnamen PHONENAME und Anrufwählmöglichkeiten für alternative Anrufziele angibt.

9. Verfahren gemäß Anspruch 1,
**dadurch gekennzeichnet, dass** die Nachricht vom Benutzer (1) einen Vorcode NAM enthält zum Zweck des Unterscheidens dieser Nachricht von Nachrichten an dieselbe Betreiberzentrale (3) bezüglich anderer von dieser Betreiberzentrale angebotener Service.

10. Verfahren nach Anspruch 1,
**dadurch gekennzeichnet, dass**, wenn ein bestimmtes Kundenprofil eine Telefonkonferenzanweisung enthält, die an einen bestimmten Telefondomainnamen PHONENAME gekoppelt ist, die Betreiberzentrale (3) automatisch eine Telefonkonferenz zwischen dem Benutzer (1) und wenigstens zwei anderen Benutzeranschlüssen verbindet, die keine Kunden zu sein brauchen.

11. Verfahren nach Anspruch 1,
**dadurch gekennzeichnet, dass**, wenn von der Betreiberzentrale (3) eine erste Anrufverbindung zwischen einem Benutzer (1) und einem ersten Domainnamenziel aufgebaut wurde, der Benutzer (1) eine andere Textnachricht schickt, die einen anderen Telefondomainnamen enthält, um eine weitere Zieltelefonnummer aus der Datenbank (5) aufzurufen, und wenn dieser neue zielanruf von der Betreiberzentrale (3) aus verbunden wurde, werden die erste Anrufverbindung und die neue Anrufverbindung gekoppelt, um eine Telefonkonferenz zu bilden.

12. Verfahren nach Anspruch 1,
**dadurch gekennzeichnet, dass** eine Kundenprofildatenbank in der Betreiberzentrale-Datenbank (5) mit variablen Parametern, wie Ort und Zeit ausgestattet wird, so dass ein dazugehöriges Ziel hinsichtlich solcher Parameter variieren kann.

13. Verfahren nach Anspruch 1,
**dadurch gekennzeichnet, dass** ein Betreiberzentrale-Code 2001 für mnemonische oder Zwecke einfachen Wählens ausgewählt wird, wie 6263 für NAME auf einer Standard-Telefontastatur.

14. Digitales Telefonsystem zum Verbinden von Anrufen, umfassend Benutzertelefone (1), die eine Option zum Verwenden eines textbasierten Nachrichtenservices haben, lokale Vermittlungsstellen (2) und eine Betreiberzentrale (3) mit einer Datenbank (5),
**dadurch gekennzeichnet, dass**
- die Datenbank (5) eine Kundenprofildatenbank für Kunden umfasst, die vom Betreiber das Recht auf entsprechende Telefondomainnamen PHONENAME erlangt haben,
- die Kundenprofildatenbank wenigstens eine Zieltelefonnummer für jeden Domainnamen enthält,
- die Betreiberzentrale (3) auch umfasst
- Mittel (10) zum Abrufen einer Zieltelefonnummer aus der Datenbank (5), die zu einem Telefondomainnamen PHONENAME gehört, der in der Nachricht enthalten ist, und
- Mittel (10) zum Anrufen der Zieltelefonnummer und der Benutzernummer und zum direkten Verbinden des Benutzers (1) mit einem dazugehörigen Ziel.

15. System gemäß Anspruch 14,
**dadurch gekennzeichnet, dass** die Betreiberzentrale (3) mittels einer Schnittstelle zur Anwendungsprogrammierung (6) unter Verwendung eines standardisierten Satzes an Befehlen mit einem Netzwerk verbunden ist, um Verbindungen zwischen dem Benutzer (1) und dem Ziel in irgendeiner durch Servicelogik oder Steueraktionen definierten Abfolge aufzubauen.

16. System gemäß Anspruch 15,
**dadurch gekennzeichnet, dass** die Betreiberzentrale (3) ferner Mittel (9) umfasst, um Sprach- oder Nachrichteneingabeaufforderungen bereitzustellen, wie sie durch die Servicelogik oder Steueraktionen definiert werden.

17. System gemäß Anspruch 15,
**dadurch gekennzeichnet, dass** die Betreiberzentrale (3) ferner Mittel (10) umfasst, um Abrechnungsinformation zu sammeln und nach Bedarf an Gebührenerfassungszentralen weiterzuleiten.

18. System gemäß Anspruch 14,
**dadurch gekennzeichnet, dass** die Betreiberzentrale (3) Mittel (10) umfasst zum Sammeln von Daten bezüglich eines Ortes eines Benutzers (1) aus der lokalen Vermittlungsstelle (2), und um aus diesen Daten eine Verbindung des Anrufs an ein nächstliegendes lokales Telefon unter Telefonen anzuweisen, die Zieltelefonnummern in einem Kundenprofil haben, das durch einen in der Nachricht vom Benutzer (1) angegebenen Telefondomainnamen identifiziert wird.

19. System gemäß Anspruch 14,
**dadurch gekennzeichnet, dass** die Betreiberzentrale (3) Mittel (10) umfasst zum Sammeln von Daten bezüglich eines Ortes eines Benutzers (1) aus der lokalen Vermittlungsstelle (2) und Mittel zum Zurückgeben einer Nachricht, gemäß einem vorprogrammierten Entscheidungsalgorithmus, mit wenigstens zwei alternativen Wahlmöglichkeiten bezüglich der Zielverbindung an den Benutzer (1).

20. System gemäß Anspruch 19,
**dadurch gekennzeichnet, dass** das Mittel zum Zurückgeben einer Nachricht ein sprachgesteuertes System (9) ist.

21. System gemäß Anspruch 14,
**dadurch gekennzeichnet, dass** die Betreiberzentrale (3) eine Konferenzbrücke (8) enthält, um Telefonkonferenzen zwischen dem Benutzer (1) und wenigstens zwei anderen Benutzeranschlüssen zu verbinden, die nicht notwendigerweise Kunden der Betreiberzentrale (3) sind.

22. System gemäß Anspruch 14,
**dadurch gekennzeichnet, dass** die Kundenprofildatenbank in der Betreiberzentrale-Datenbank (5) mit variablen Parametern, wie Ort und Zeit ausgestattet ist.

23. Anrufanforderungssignal zur Verwendung beim Verbinden von Vermittlungsstellen (2) und Betreiberzentralen (3) zur direkten Verbindung von Anrufen in digitalen Telefonsystemen,
**dadurch gekennzeichnet, dass** das Signal ein Signal für einen textbasierten Nachrichtenservice ist und wenigstens umfasst
- einen Telefondomainnamen PHONENAME und
- einen Betreiberzentrale-Code 2001.

24. Signal gemäß Anspruch 23,
**dadurch gekennzeichnet, dass** es auch einen Vorcode NAM enthält, um einen speziellen von der Betreiberzentrale (3) angebotenen Service anzugeben.

25. Signal gemäß Anspruch 23,
**dadurch gekennzeichnet, dass** der Telefondomainname auch eine Internet-Topdomain-Angabe enthält.

## Revendications

1. Procédé destiné à connecter des appels téléphoniques dans des systèmes numériques de téléphonie, procédé dans lequel un utilisateur (1) envoie, en utilisant un service de messagerie basé sur des textes, une information vers un centre opérationnel (3), information sur base de laquelle un numéro de téléphone de destination est trouvé dans une base de données (5) dans ledit centre opérationnel (3), et un appel est connecté entre l'utilisateur (1) et une destination souhaitée,
**caractérisé par**
- l'établissement dans ladite base de données (5) du centre opérationnel d'une base de profils de clients pour des clients ayant acquis de la part de l'opérateur un droit à des noms PHONENAME de domaines téléphoniques respectifs, ladite base de profils de clients contenant au moins un numéro de téléphone de destination pour chaque nom de domaine téléphonique, et
- l'envoi par les utilisateurs (1) de ladite information sous la forme d'un message constitué d'au moins un nom PHONENAME de domaine téléphonique et un code 2001 de centre opérationnel, de telle sorte que ledit message soit acheminé via au moins un échange local (2) vers le centre opérationnel (3) du fait dudit code 2001 de centre opérationnel, et que dans ladite base de données (5) du centre opérationnel soit recherché un nom de domaine souhaité et au moins un numéro de téléphone de destination correspondant, une destination étant ensuite appelée depuis le centre opérationnel au moyen dudit numéro de téléphone de destination, pendant qu'un autre appel est acheminé vers l'utilisateur (1), et que la connexion est directement établie.

2. Procédé de la revendication 1,
**caractérisé en ce que** ledit centre opérationnel (3) est connecté à un réseau au moyen d'une Interface (6) de Programmes d'Application, utilisant un jeu standardisé de commandes pour établir des connexions entre l'utilisateur (1) et la destination dans toute séquence définie par des logiques de service ou des actions de commande.

3. Procédé de la revendication 2,
**caractérisé en ce que** ledit centre opérationnel (3) fonctionne en outre pour fournir des guides vocaux ou par messages tels que définis par lesdites logiques de service ou actions de commande.

4. Procédé de la revendication 2,
**caractérisé en ce que** ledit centre opérationnel (3) fonctionne en outre pour recueillir et envoyer, si nécessaire, une information de frais vers des centres de facturation.

5. Procédé de la revendication 1,
**caractérisé en ce que** ledit centre opérationnel (3) recueille des données concernant une localisation d'un utilisateur (1) à partir dudit échange local (2), et à partir de ces données le centre opérationnel (3) ordonne une connexion de l'appel vers un téléphone local le plus proche parmi des téléphones ayant des numéros de téléphone de destination se situant dans un profil de client identifié par un nom de domaine téléphonique établi dans le message venant de l'utilisateur (1).

6. Procédé de la revendication 1,
**caractérisé en ce que** le centre opérationnel (3) recueille des données concernant une localisation d'un utilisateur (1) à partir de l'échange local (2), et conformément à un algorithme décisionnel pré-programmé ledit centre opérationnel (3) renvoie vers l'utilisateur (1) un message contenant au moins deux choix alternatifs concernant la connexion de destination.

7. Procédé de la revendication 6,
**caractérisé en ce que** le message comportant des choix est un message textuel.

8. Procédé de la revendication 6,
**caractérisé en ce que** le message comportant des choix est un message vocal établissant le nom « PHONENAME » de domaine téléphonique appelé et composant des numéros choisis pour des destinations d'appel alternatives.

9. Procédé de la revendication 1,
**caractérisé en ce que** le message venant de l'utilisateur (1) contient un pré-code « NAM » ayant pour but de distinguer ce message de messages adressés au même centre opérationnel (3) concernant d'autres services offerts par le centre opérationnel.

10. Procédé de la revendication 1,
**caractérisé en ce que** lorsqu'un certain profil de client contient une instruction d'appel de conférence liée à un certain nom PHONENAME de domaine téléphonique, le centre opérationnel (3) connecte automatiquement un appel de conférence entre l'utilisateur (1) et au moins deux autres abonnements qui peuvent ne pas être des clients.

11. Procédé de la revendication 1,
**caractérisé en ce que** lorsqu'une première connexion d'appel a été établie par le centre opérationnel (3) entre un utilisateur (1) et une première destination de nom de domaine, l'utilisateur (1) envoie un autre message textuel contenant un autre nom de domaine téléphonique pour appeler un autre numéro de téléphone de destination depuis la base de données (5), et lorsque ce nouvel appel de la destination a été connecté depuis le centre opérationnel (3), la première connexion d'appel et la nouvelle connexion d'appel sont reliées pour former un appel de conférence.

12. Procédé de la revendication 1,
**caractérisé en ce qu'**une base de profils de clients dans la base de données (5) du centre opérationnel est fournie avec des paramètres variables tels que la localisation et le temps, de telle sorte qu'une destination correspondante puisse varier par rapport à ces paramètres.

13. Procédé de la revendication 1,
**caractérisé en ce qu'**un code 2001 de centre opérationnel est sélectionné dans un but mnémotechnique ou de facilité de numérotation, tel que 6263 pour désigner « NAME » dans un clavier téléphonique standard.

14. Système de téléphonie numérique destiné à connecter des appels, comprenant des téléphones d'utilisateurs (1) disposant d'une option pour une utilisation d'un service de messagerie à base de textes, des échanges locaux (2) et un centre opérationnel (3) disposant d'une base de données (5),
**caractérisé en ce que**
- ladite base de données (5) comprend une base de profils de clients pour des clients ayant acquis de la part de l'opérateur le droit d'accès vers des noms PHONENAME de domaines téléphoniques respectifs,
- ladite base de profils de clients contient au moins un numéro de téléphone de destination pour chaque nom de domaine,
- ledit centre opérationnel (3) comprend aussi
- un moyen (10) destiné à prendre depuis ladite base de données (5) un numéro de téléphone de destination qui correspond à un nom PHONENAME de domaine téléphonique compris dans ledit message, et
- un moyen (10) destiné à appeler le numéro de téléphone de destination et le numéro d'utilisateur, et à connecter l'utilisateur (1) directement à une destination correspondante.

15. Système de la revendication 14
**caractérisé en ce que** ledit centre opérationnel (3) est connecté à un réseau au moyen d'une Interface (6) de Programmes d'Application, utilisant un jeu standardisé de commandes pour établir des connexions entre l'utilisateur (1) et la destination dans toute séquence définie par des logiques de service ou des actions de commande.

16. Système de la revendication 15
**caractérisé en ce que** ledit centre opérationnel (3) comprend en outre un moyen (9) destiné à fournir des guides vocaux ou par messages tels que définis par lesdites logiques de service ou actions de commande.

17. Système de la revendication 15
**caractérisé en ce que** ledit centre opérationnel (3) comprend en outre un moyen (10) destiné à recueillir et envoyer, si nécessaire, une information de frais vers des centres de facturation.

18. Système de la revendication 14
**caractérisé en ce que** ledit centre opérationnel (3) comprend un moyen (10) destiné à recueillir des données concernant une localisation d'un utilisateur (1) à partir dudit échange local (2), et à partir de ces données ordonner une connexion de l'appel vers un téléphone local le plus proche parmi des téléphones ayant des numéros de téléphone de destination se situant dans un profil de client identifié par un nom de domaine téléphonique établi dans le message venant de l'utilisateur (1).

19. Système de la revendication 14
**caractérisé en ce que** le centre opérationnel (3) comprend un moyen (10) destiné à recueillir des données concernant une localisation d'un utilisateur (1) à partir de l'échange local (2), et un moyen destiné à renvoyer vers l'utilisateurs (1), conformément à un algorithme décisionnel pré-programmé, un message contenant au moins deux choix alternatifs concernant la connexion de destination.

20. Système de la revendication 19
**caractérisé en ce que** ledit moyen destiné à renvoyer un message est une machine vocale (9).

21. Système de la revendication 14
**caractérisé en ce que** le centre opérationnel (3) contient un pont de conférences (8) destiné à connecter des appels de conférences entre l'utilisateur (1) et au moins deux autres abonnements qui ne sont pas nécessairement des clients du centre opérationnel (3).

22. Système de la revendication 14
**caractérisé en ce qu'**une base de profils de clients dans la base de données (5) du centre opérationnel est fournie avec des paramètres variables tels que la localisation et le temps.

23. Signal de demande d'appel pour une utilisation lors de la connexion d'échanges (2) et centres opérationnels (3) pour une connexion directe d'appels dans des systèmes numériques de téléphonie,
**caractérisés en ce que** le signal est un signal destiné à un service de messagerie à base de textes, et comprend au moins
- un nom PHONENAME de domaine téléphonique, et
- un code 2001 de centre opérationnel

24. Signal de la revendication 23,
**caractérisé en ce qu'**il comprend aussi un pré-code « NAM » pour indiquer un service spécifique offert par un centre opérationnel (3).

25. Signal de la revendication 23,
**caractérisé en ce que** le nom de domaine téléphonique contient aussi une indication de domaine Internet de premier niveau.
